# EUROPEAN PATENT APPLICATION

(11) **EP 4 708 640 A1**
(43) Date of publication of application: **11.03.2026**
(21) Application number: 24927666.8
(22) Date of filing: 19.07.2024
(51) Int. Cl.: H02K 5/04, H02K 7/14, H02K 9/06, A47L 9/22

(54) **MOTOR**

(71) Applicant: LG Electronics Inc., Seoul 07336 (KR)
(72) Inventor: KIM, Taekyung, Seoul 08592 (KR); KIM, Sunho, Seoul 08592 (KR); YANG, Giyeob, Seoul 08592 (KR); KIM, Jounyoung, Seoul 08592 (KR); CHO, Seongho, Seoul 08592 (KR)
(74) Representative: Vossius & Partner Patentanwälte Rechtsanwälte mbB
(86) International application number: PCT/KR2024/010496
(87) International publication number: WO 2026/018949

(57) **Abstract**

Provided is a motor. According to one aspect of the present disclosure, a motor includes: a first housing; a rotor coupled to the rotational shaft; a stator assembly coupled to the first housing and placed radially outward of the rotor; an impeller coupled to an axial lower region of the rotational shaft; and a second housing coupled to the first housing and enclosing the impeller, and the first housing may include a bearing housing to which the rotational shaft is rotatably coupled, and a plurality of first leg portions that extend from a radial outer side to an axial lower portion of the bearing housing and are spaced apart from each other in a circumferential direction, the second housing may include an impeller cover covering the impeller, and a plurality of second leg portions that extend from an outer surface of the impeller cover to an axial upper portion and are coupled to the plurality of first leg portions, and an upper end of the impeller cover may be placed at an axial lower portion of the stator assembly and the plurality of second leg portions may be placed at a radial outer side of the stator assembly.

## Description

### [Technical Field]

The present disclosure relates to a motor, and more particularly, to a motor for a cleaner that performs cleaning by sucking or wiping off dust or foreign materials of a cleaning target region.

### [Background Art]

In general, a vacuum cleaner is a household appliance that sucks foreign materials such as dust and collects the sucked foreign materials in a separate collection unit installed inside a body.

Specifically, a high suction force is required for the vacuum cleaner to effectively suck the foreign materials, and an intensity of the suction force is proportional to a rotational force of a motor. That is, the higher the rotational force of the motor, the higher a rotational speed of a fan connected to the motor, thereby increasing a suction force applied to the foreign materials.

In general, a motor for a vacuum as a device that obtains rotational force from electrical energy includes a stator and a rotor. The rotor can be rotated by an electromagnetic interaction with the stator.

A conventional motor for a cleaner includes a rotational shaft that rotates with the rotor, an impeller coupled to the rotational shaft, a first housing that supports the stator, and a second housing that encloses the impeller.

In this case, since some components of the first housing and the second housing are placed between the impeller and the stator in order to couple the stator and the second housing to each other, there is a problem in that the flow path resistance is increased and thus efficiency is reduced.

### [Disclosure]

### [Technical Problem]

An object to be achieved by the present disclosure is to provide a motor that may enhance flow path performance during an operation of the motor.

Further, an object to be achieved by the present disclosure is to provide a motor that may enhance spatial efficiency by reducing an axial length of the motor.

In addition, an object to be achieved by the present disclosure is to provide a motor that may reduce a material cost.

Further, an object to be achieved by the present disclosure is to provide a motor of which inside may be visually confirmed.

### [Technical Solution]

In order to achieve the object, according to one aspect of the present disclosure, a motor includes: a first housing; a rotor coupled to the rotational shaft; a stator assembly coupled to the first housing and placed radially outward of the rotor; an impeller coupled to an axial lower region of the rotational shaft; and a second housing coupled to the first housing and enclosing the impeller.

In this case, the first housing may include a bearing housing to which the rotational shaft is rotatably coupled, and a plurality of first leg portions that extend from a radial outer side to an axial lower portion of the bearing housing and are spaced apart from each other in a circumferential direction, and the second housing may include an impeller cover covering the impeller, and a plurality of second leg portions that extend from an outer surface of the impeller cover to an axial upper portion and are coupled to the plurality of first leg portions.

Further, an upper end of the impeller cover may be placed at an axial lower portion of the stator assembly and the plurality of second leg portions may be placed at a radial outer side of the stator assembly.

As a result, flow path performance when the motor operates may be enhanced.

Further, an upper surface of the impeller cover may directly face a lower surface of the stator assembly.

As a result, an axial length of the motor is reduced, thereby enhancing spatial efficiency.

In addition, the impeller cover may be non-overlapped with the stator assembly in a direction perpendicular to the axial direction.

Moreover, the plurality of second leg portions may be spaced apart from each other in the circumferential direction, and the plurality of second leg portions may directly face each other in the circumferential direction.

As a result, material cost of the motor may be reduced.

In addition, an axial upper region of the impeller cover may be formed to have a smaller inner diameter than an axial lower region of the impeller cover.

Further, the impeller cover may include an overlapping region overlapped with the impeller in the direction perpendicular to the axial direction, and an upper region that extends toward an axial upper portion in the overlapping region, and an inner diameter of the upper region may increase toward the axial upper portion.

In addition, an upper surface of the upper region may be formed as a curved surface, and a region from an axial upper end up to a radial inner end of the upper region may have a constant curvature radius.

In addition, the upper surface of the upper region may be formed as the curved surface, and a region from the axial upper end up to the radial inner end of the upper region may have a curvature radius which increases toward the axial upper portion.

In addition, the upper surface of the upper region may be formed as the curved surface, and a region from the axial upper end up to the radial inner end of the upper region may have a curvature radius which decreases toward the axial upper portion.

Further, the upper region may include a tapered surface placed at an axial lower portion toward a radial inner side from an upper surface.

In this case, the upper region may include a curved surface formed from the tapered surface up to the radial inner end, and the curved surface may have a constant curvature radius.

Further, an outer diameter of the upper region may be constant.

Further, an inner diameter of the overlapping region may decrease toward the axial upper portion.

Further, the plurality of second leg portions may include first coupling portions which protrude to a radial inner region, and the stator assembly may include a stator core placed at the radial outer side of the rotor, a coil wound to the stator core, and an insulator coupled to the stator core.

In this case, a radial outer surface of an axial lower region of the insulator may include second coupling portions which are formed to be concave at a radial inner side, and coupled to the first coupling portions.

Further, the first housing may further include an annular circumferential portion that connects the plurality of first leg portions and extends in a circumferential direction, and the plurality of first leg portions may include third coupling portions which are formed to be concave in a radial outer direction from a radial inner surface, and coupled to the plurality of second leg portions.

In this case, a radial outer surface of the plurality of second leg portions may be in contact with a radial inner surface of the circumferential portion.

Further, the circumferential portion may include a plurality of circumferential portions spaced apart from each other in an axial direction.

Further, first housing may include a plurality of connection portions that connect the bearing housing, and the plurality of first leg portions, and may include fourth coupling portions that extend to an axial lower portion from the plurality of connection portions, and extend in a radial inner direction from the plurality of first leg portions.

In addition, the stator assembly may include a stator core placed at the radial outer side of the rotor, a coil wound to the stator core, and an insulator coupled to the stator core.

In this case, a radial outer surface of an axial upper region of the insulator may include fifth coupling portions which are formed to be concave at the radial inner side, and coupled to the fourth coupling portions.

Further, the impeller may be located downstream of a flow path generated by rotation of the impeller.

Further, the first housing may further include a circumferential portion that connects the plurality of first leg portions and extends in the circumferential direction, and the circumferential portion may include a plurality of holes penetrating the circumferential portion in the radial direction.

In addition, the motor may include a diffuser which is coupled to the second housing and to which the rotational shaft is rotatably coupled.

In this case, the impeller cover may include an overlapping region overlapped with the impeller in the direction perpendicular to the axial direction, and a lower region that extends toward an axial lower portion in the overlapping region, and the lower region may include a sixth coupling portion which is formed to be concave from a radial inner surface to a radial outer region, and to which a radial outer surface of the diffuser is coupled.

### [Advantageous Effects]

According to the present disclosure, it is possible to provide a motor that may enhance flow path performance during an operation of the motor.

Further, according to the present disclosure, it is possible to provide a motor that may enhance spatial efficiency.

In addition, according to the present disclosure, it is possible to provide a motor that may reduce a material cost.

Further, according to the present disclosure, it is possible to provide a motor of which inside may be visually confirmed.

### [Description of Drawings]

FIG. 1 is a perspective view of a motor according to a first embodiment of the present disclosure.
FIG. 2 is an exploded perspective view of the motor according to the first embodiment of the present disclosure.
FIG. 3 is a cross-sectional view of the motor according to the first embodiment of the present disclosure.
FIGS. 4 and 5 are perspective views of a second housing of the motor according to the first embodiment of the present disclosure.
FIGS. 6 and 7 are perspective views of a first housing of the motor according to the first embodiment of the present disclosure.
FIG. 8 is a cross-sectional view of a part of the second housing of the motor according to the first embodiment of the present disclosure.
FIG. 9 is a perspective view of a stator assembly of the motor according to the first embodiment of the present disclosure.
FIG. 10 is a cross-sectional view of a motor according to a second embodiment of the present disclosure.
FIG. 11 is a cross-sectional view of an impeller cover of the motor according to the second embodiment of the present disclosure.
FIG. 12 is a cross-sectional view of a motor according to a third embodiment of the present disclosure.
FIG. 13 is a cross-sectional view of an impeller cover of the motor according to the third embodiment of the present disclosure.
FIG. 14 is a cross-sectional view of a motor according to a fourth embodiment of the present disclosure.
FIG. 15 is a cross-sectional view of an impeller cover of the motor according to the fourth embodiment of the present disclosure.
FIG. 16 is a diagram illustrating a flow of air which passes through the motor according to the embodiments of the present disclosure.
FIG. 17 is a perspective view of some components of a motor according to a fifth embodiment of the present disclosure.
FIG. 18 is a perspective view of some components of a motor according to a sixth embodiment of the present disclosure.
FIG. 19 is a perspective view of some components of a motor according to a seventh embodiment of the present disclosure.
FIG. 20 is a perspective view of some components of a motor according to an eighth embodiment of the present disclosure.

### [Mode for Invention]

Hereinafter, some embodiments of the present disclosure will be described in detail with reference to exemplary drawings. It should be noted that, when components in each drawing are denoted by reference numerals, the same components are denoted by the same numerals as much as possible even if they are displayed in different drawings. Further, in describing the embodiments of the present disclosure, a detailed description of a related known configuration or function is omitted when it is determined that the detailed description interferes with an understanding of the embodiment of the present disclosure.

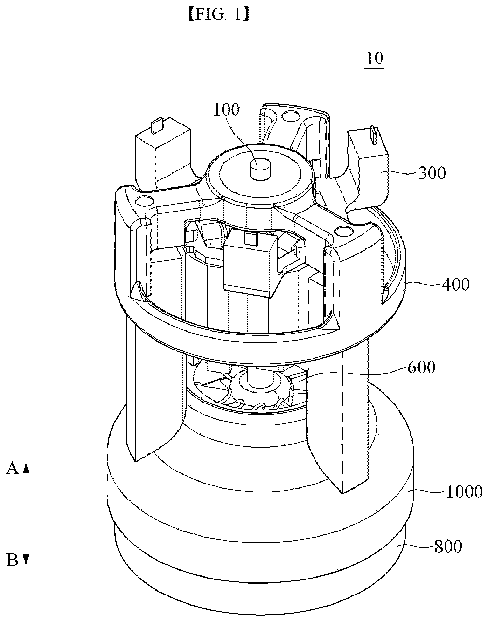

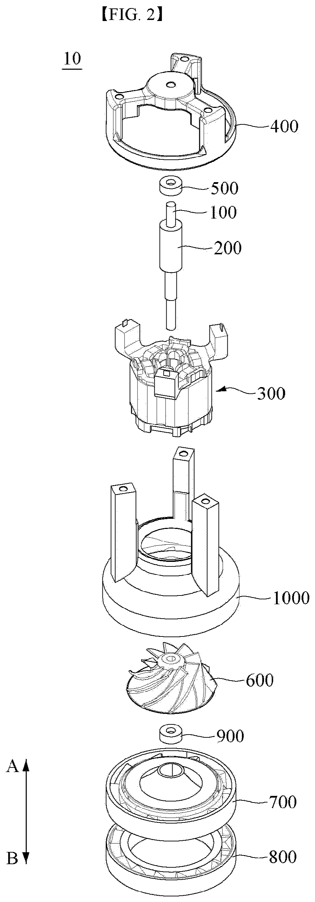

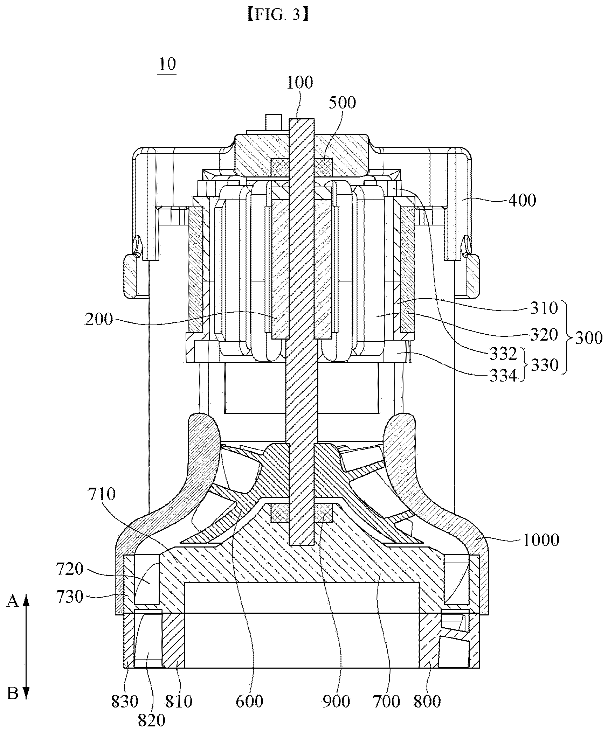

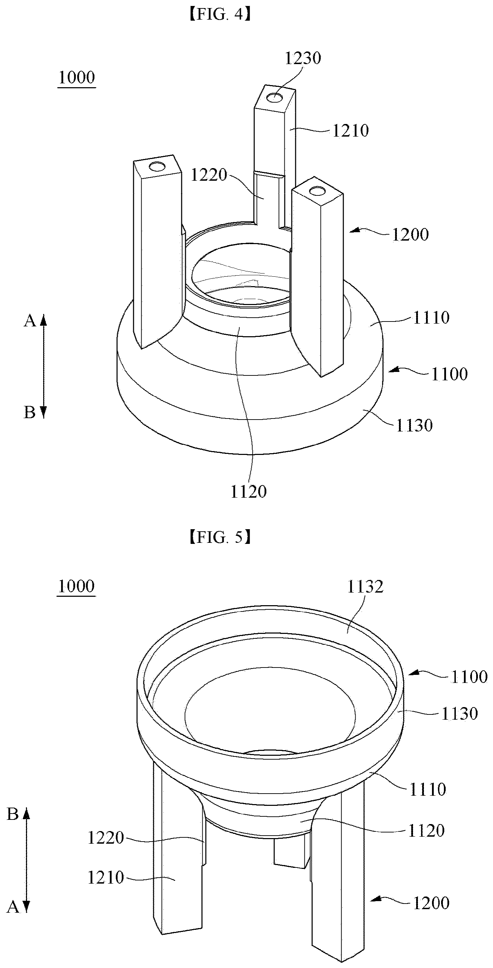

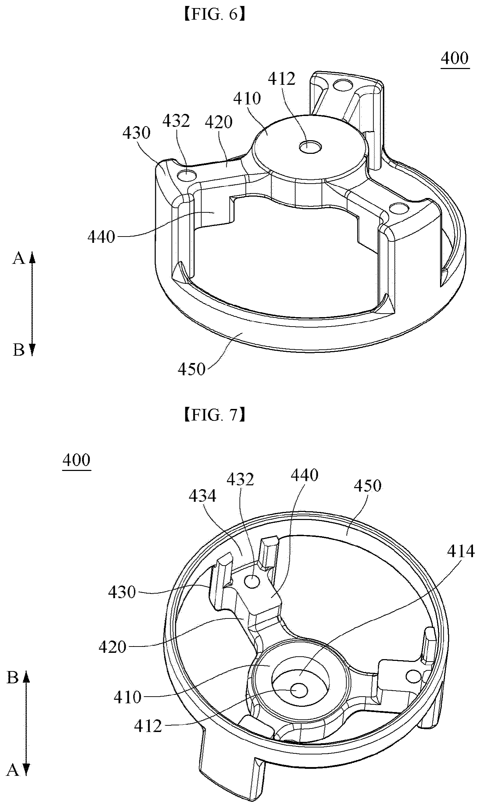

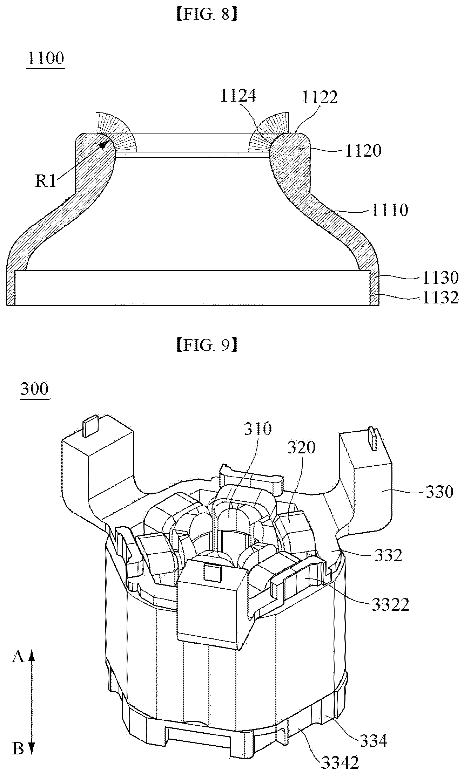

FIG. 1 is a perspective view of a motor according to a first embodiment of the present disclosure. FIG. 2 is an exploded perspective view of the motor according to the first embodiment of the present disclosure. FIG. 3 is a cross-sectional view of the motor according to the first embodiment of the present disclosure. FIGS. 4 and 5 are perspective views of a second housing of the motor according to the first embodiment of the present disclosure. FIGS. 6 and 7 are perspective views of a first housing of the motor according to the first embodiment of the present disclosure. FIG. 8 is a cross-sectional view of an impeller cover of the motor according to the first embodiment of the present disclosure. FIG. 9 is a perspective view of a stator assembly of the motor according to the first embodiment of the present disclosure.

Referring to FIGS. 1 to 9, a motor 10 according to an embodiment of the present disclosure may include a rotational shaft 100, a rotor 200, a stator assembly 300, a first housing 400, a first bearing 500, an impeller 600, diffusers 700 and 800, a second bearing 900, and a second housing 1000, but some components are executed, and other additional components are not also excluded.

The motor 10 may be a suction motor used in a cleaner. The motor 10 may generate a suction force to cause external dust to flow into the cleaner. Detailed components of the motor 10 may be placed to form a reverse flow path with respect to the rotational shaft 100. Specifically, the impeller 600 may be placed downstream of a flow path generated according to rotation of the impeller 600 coupled to the rotation shaft 100. In other words, air outside the motor 10 is sucked into the motor 10 according to the rotation of the impeller 600, and a flow path through which air flows inside the motor 10 may be formed while sequentially passing through the first housing 410, the stator assembly 300, the impeller 600, and the diffusers 700 and 800. As a result, a heat dissipation effect on heat generated due to an electromagnetic interaction between the rotor 200 and the stator assembly 300 may be enhanced compared to a motor placed in a forward flow path.

The rotational shaft 100 may extend in an axial direction. In the present disclosure, the axial direction may be interpreted as meaning a vertical direction or an up-down direction with reference to FIGS. 1 to 3. Further, in the present disclosure, it is interpreted that an axial upper portion means direction "A" and an axial lower portion means direction "B".

The rotational shaft 100 may be formed in a cylindrical shape. The rotor 200 may be coupled to an outer peripheral surface of the rotational shaft 100. The rotational shaft 100 may rotate in one direction or the other direction by rotation of the rotor 200. The impeller 600 may be coupled to an outer peripheral surface of the rotational shaft 100. The impeller 600 may rotate in one direction or the other direction according to rotation of the rotational shaft 100. The rotational shaft 100 may be rotatably coupled to the first housing 400 through the first bearing 500. The rotational shaft 100 may be rotatably coupled to the diffusers 700 and 800 through the second bearing 900.

The rotor 200 may face the stator assembly 300. The rotor 200 may be placed inside a space formed by the stator assembly 300. The rotor 200 may be formed in a cylindrical shape. The rotor 200 may rotate in one direction or the other direction by an electromagnetic interaction with a stator core 310 of the stator assembly 300. Specifically, when a magnetic field is formed in the stator core 310 by a coil 320 wound on the stator core 310, the rotor 200 may rotate in one direction or the other direction by the resulting electromagnetic interaction. The rotor 200 may be placed between the first bearing 500 and the second bearing 900.

The stator assembly 300 may be coupled to the first housing 400 and/or the second housing 1000. The stator assembly 300 may be referred to as a 'stator'. The stator assembly 300 may include the stator core 310, the coil 320, and the insulator 330.

The stator core 310 may be placed at a radial outer side of the rotor 200, and may face the rotor 200. The coil 320 may be wound on the stator core 310. The stator core 310 may be formed of a conductive material.

The insulator 330 may enclose the stator core 310. The insulator 330 may be formed of an insulating material.

The first housing 400 may include a first leg portion 430. The first leg portion 430 may extend to an axial lower portion from a radial outer side of the bearing housing 410. The first leg portion 430 may extend to an axial lower portion from a radial outer end of the connection portion 420. The first leg portion 430 may extend in a vertical direction. The first leg portion 430 may be coupled to the second housing 1000. The first leg portion 430 may include a plurality of first leg portions 430 that are spaced apart from each other in a circumferential direction. In the present disclosure, it is described as an example that the number of plurality of first leg portions 430 is three, but is not limited thereto, and the number of plurality of first leg portions 430 may be variously changed.

The insulator 330 may include an upper region 332. The upper region 332 of the insulator 330 may be disposed in an axial upper portion of the stator core 310. The upper region 332 of the insulator 330 may be coupled to the first housing 400. The upper region 332 of the insulator 330 may be coupled to the first leg portion 430 of the first housing 400. A radial outer surface of the upper region 332 of the insulator 330 may include a fifth coupling portion 3322 that is formed to be concave radially inward. A fourth coupling portion 440 of the first housing 400 may be coupled to the fifth coupling portion 3322. The fourth coupling portion 440 of the first housing 400 may be seated on the fifth coupling portion 3322. For example, the fourth coupling portion 440 may be inserted into the fifth coupling portion 3322.

The insulator 330 may include a lower region 334. The lower region 334 of the insulator 330 may be placed in an axial lower portion of the stator core 310. The lower region 334 of the insulator 330 may be coupled to the second housing 1000. The lower region 334 of the insulator 330 may be coupled to a second leg portion 1200 of the second housing 1000. A radial outer surface of the lower region 334 of the insulator 330 may include a second coupling portion 3342 that is formed to be concave radially inward. A first coupling portion 1220 of the second leg portion 1200 of the second housing 1000 may be coupled to the second coupling portion 3342. For example, the first coupling portion 1220 may be inserted into the second coupling portion 3342.

The first housing 400 may be coupled to the stator assembly 300. The first housing 400 may be coupled to the insulator 330. The first housing 400 may enclose the stator core 310. The rotational shaft 100 may be rotatably coupled to the first housing 400. The first bearing 500 may be coupled to the first housing 400.

The first housing 400 may include a bearing housing 410. The bearing housing 410 may be placed in an axial upper portion of the stator assembly 300. The bearing housing 420 may be formed in a cylindrical shape or an annular shape. The bearing housing 410 may be penetrated by the rotational shaft 100. The bearing housing 410 may include a rotational shaft hole 412 penetrated by the rotational shaft 100. The first bearing 500 may be coupled to the bearing housing 410. The bearing housing 410 may include a bearing groove 414 that is formed to be concave axially upward on a lower surface or concave in a radial outward direction on a radial inner surface. The first bearing 500 may be coupled to the bearing groove 414. The rotational shaft 100 may be rotatably coupled to the bearing housing 410 through the first bearing 500.

The first housing 400 may include a connection portion 420. The connection portion 420 may extend in a radial outward direction on a radial outer surface or an outer peripheral surface of the bearing housing 410. The connection portion 420 may connect the bearing housing 410 and the first leg portion 430. The connection portion 420 may include a plurality of connection portions 420 that connect the bearing housing 410 and the plurality of first leg portions 430.

The first leg portion 430 may be coupled to the second leg portion 1200 of the second housing 1000. The first leg portion 430 may be coupled to the second leg portion 1200 of the second housing 1000 through a fastening member (not illustrated). To this end, a first fastening hole 432 may be formed in the first leg portion 430.

The first leg portion 430 may include a third coupling portion 434 that is formed to be concave to a radial outer region on a radial inner surface. The second leg portion 1200 may be coupled to the third coupling portion 434. Specifically, the third coupling portion 434 may be in contract with a radial outer surface of the second leg portion 1200, and in contract with a portion of both side surfaces connected to a radial outer surface of the second leg portion.

The first housing 400 may include the fourth coupling portion 440. The fourth coupling portion 440 may extend axially downward from the connection portion 420. The fourth coupling portion 440 may extend axially inward from the first leg portion 430. The fourth coupling portion 440 may extend radially inward from the first leg portion 430 simultaneously while extending axially downward from the connection portion 420. The fourth coupling portion 440 may be coupled to the fifth coupling portion 3322 of the upper region 332 of the insulator 330. A radial inner surface of the fourth coupling portion 440 may be in contact with the fifth coupling portion 3322. A portion of both side surfaces connected to the radial inner surface of the fourth coupling portion 440 may be in contact with the fifth coupling portion 3322.

The first housing 400 may include a circumferential portion 450. The circumferential portion 450 may extend in the circumferential direction. The circumferential portion 450 may connect the plurality of first leg portions 430. The circumferential portion 450 may be formed in the annular shape as a whole. As a result, rigidity of the first housing 400 may be enhanced. A radial inner surface of the circumferential portion 450 may be in contact with the radial outer surface of the second leg portion 1200.

The first bearing 500 may be placed in the axial upper portion of the stator assembly 300. The first bearing 500 may be formed in the annular shape.

The impeller 600 may be placed in an axial lower region of the rotational shaft 100. The impeller 600 may be placed between the stator assembly 300 and the second bearing 900. The impeller 600 may be covered by the second housing 1000. Specifically, the impeller 600 may be placed at a radial inner side of an overlapping region 1110 of an upper impeller cover 1100, and covered by the impeller cover 1100. The impeller 600 may have a smaller diameter toward an upper portion in the axial direction. The impeller 600 may be formed in a centrally opened conical shape as a whole. A plurality of impeller blades projected outward in the radial direction and spaced apart from each other in the circumferential direction may be formed on a radial outer surface of the impeller 600.

The diffusers 700 and 800 may be placed in an axial upper portion of the impeller 600. The diffusers 700 and 800 may be coupled to the impeller cover 1100 of the second housing 1000. The diffusers 700 and 800 may be coupled to a sixth coupling portion 1132 of the impeller cover 1100.

The diffusers 700 and 800 may include a first diffuser 700 placed in an axial lower portion of the impeller 600 and a second diffuser 800 placed in an axial lower portion of the first diffuser 700.

The second bearing 900 may be coupled to the first diffuser 700. The rotational shaft 100 may be rotatably coupled to the first diffuser 700. The first diffuser 700 may be coupled to the sixth coupling portion 1132 of the impeller cover 1100. The first diffusers 700 may include a first diffuser body 710 which may be rotatably coupled to the rotational shaft 100 through the second bearing 900, a plurality of first guide vanes 720 placed in a radial outer region of the first diffuser body 710 and spaced apart from each other in the circumferential direction, and first outer surfaces 730 that connect radial outer ends of the plurality of first guide vanes 720 and are connected in the circumferential direction. The first outer surface 730 may be coupled to the sixth coupling portion 1132 of the impeller cover 1100.

The second diffuser 800 may be coupled to the first diffuser 700. The second diffusers 800 may include a second diffuser body 810, a plurality of second guide vanes 820 placed in a radial outer region of the second diffuser body 810 and spaced apart from each other in the circumferential direction, and second outer surfaces 830 that connect radial outer ends of the plurality of second guide vanes 820 and are connected in the circumferential direction.

The number and shapes of first guide vanes 720 and second guide vanes 820 may be different from each other. As a result, the first guide vane 720 and the first guide vane 820 may enhance efficiency of air flow by the impeller 600.

The second bearing 900 may be coupled to the diffusers 700 and 800. The second bearing 900 may be placed below the impeller 600. The second bearing 900 may be coupled to the first diffuser 700. The rotational shaft 100 may be coupled to the second bearing 900. As a result, the second bearing 900 may rotatably couple the rotational shaft 100 to the diffusers 700 and 800. The second bearing 900 may be formed in the annular shape.

The second housing 1000 may be coupled to the first housing 400. The second housing 1000 may cover the impeller 600. The diffusers 700 and 800 may be coupled to the second housing 1000.

The second housing 1000 may include the impeller cover 1100. The impeller cover 1100 may cover the impeller 600. The impeller cover 1100 may face the impeller 600. An air gap may be formed between the radial inner surface of the impeller cover 1100, and the impeller 600. The impeller cover 1100 may be formed in a shape in which an inner diameter decreases toward the upper portion in the axial direction as a whole. The impeller cover 1100 may be formed in a shape in which an outer diameter decreases toward the upper portion in the axial direction as a whole. As a result, flow efficiency of air by the impeller 600 may be enhanced, and spatial efficiency may be enhanced.

An upper end of the impeller cover 1100 may be placed in the axial lower portion of the stator assembly 300. The upper end of the impeller cover 1100 may be placed in the axial lower portion of the stator assembly 300. An upper surface of the impeller cover 1100 may directly face a lower surface of the stator assembly 300. That is, no component may be placed between the upper surface of the impeller cover 1100 and the lower surface of the stator assembly 300. As a result, since there is no resistor placed between the upper surface of the impeller cover 1100 and the stator assembly 300, the flow path performance of the motor 10 may be enhanced. In addition, an axial length of the motor 10 is reduced, thereby enhancing the spatial efficiency. The impeller cover 1100 may be non-overlapped with the stator assembly 300 in a direction perpendicular to the axial direction.

The impeller cover 1100 may include an overlapping region 1110, an upper region 1120, and a lower region 1130.

The overlapping region 1110 of the impeller cover 1100 may be overlapped with the impeller 600 in a direction perpendicular to the axial direction or in a radial direction. An inner diameter of the overlapping region 1110 of the impeller 1100 may decrease toward an upper portion in the axial direction. An outer diameter of at least a portion of the overlapping region 1110 of the impeller cover 1100 may decrease toward the upper portion in the axial direction. A radial inner surface of the overlapping region 1110 of the impeller cover 1100 may face the impeller 600. An air gap may be formed between the radial inner surface of the overlapping region 1110 of the impeller cover 1100, and the impeller 600. A lower end of the second leg portion 1200 may be placed on a radial outer surface of the overlapping region 1110 of the impeller cover 1100.

The upper region 1120 of the impeller cover 11000 may be placed above the overlapping region 1110. The upper region 1120 of the impeller cover 1100 may extend in the vertical direction. The upper region 1120 of the impeller cover 1100 may extend in the axial upper portion in the overlapping region 1110. The upper region 1120 of the impeller cover 1100 may have a smaller diameter than the lower region 1130 of the impeller cover 1100. An inner diameter of the upper region 1120 of the impeller cover 1100 may increase toward the axial upper portion. An outer diameter of the upper region 1120 of the impeller cover 1100 may be constant.

The upper surface 1122 of the impeller cover 1100 may be formed as a curved surface. Specifically, the upper surface 1122 of the upper region 1120 of the impeller cover 1100 may be formed as the curved surface. A region 1124 from an axial upper end to a radial inner end of the impeller cover 1100 may have a constant curvature radius R1. Since the region 1124 from the axial upper end to the radial inner end of the impeller cover 1100 has the constant curvature radius R1, turbulence of air flowing into the impeller cover 1100 may be prevented.

The lower region 1130 of the impeller cover 11000 may be placed below the overlapping region 1110. The lower region 1130 of the impeller cover 1100 may extend in the vertical direction. The lower region 1130 of the impeller cover 1100 may extend in the axial lower portion in the overlapping region 1110. The lower region 1130 of the impeller cover 1100 may have a larger diameter than the upper region 1120 of the impeller cover 1100.

The lower region 1130 of the impeller cover 1100 may include the sixth coupling portion 1132 that is formed to be concave radially outward on the radial inner surface. The diffusers 700 and 800 may be coupled to the sixth coupling portion 1132. Specifically, a first outer surface 730 of the first diffuser 700 may be coupled to the sixth coupling portion 1132.

The second housing 1000 may include a second leg portion 1200. The second leg portion 1200 may extend axially upward from the outer surface of the impeller cover 1100. Specifically, the second leg portion 1200 may extend axially upward from a radial outer surface of the overlapping region 1110. The second leg portion 1200 may extend in the vertical direction. The second leg portion 1200 may be placed on a radial outer side of the stator assembly 300. As a result, spatial efficiency may be enhanced.

The second leg portion 1200 may be coupled to the first housing 400. The second leg portion 1200 may be coupled to the first leg portion 430 of the first housing 400. The second leg portion 1200 may be coupled to a third coupling portion 434 of the first leg portion 430 of the first housing 400. The radial outer surface of the second leg portion 1200 may be in contact with a third coupling portion 434. A portion of both side surfaces connected to the radial outer surface of the second leg portion 1200 may be in contact with the third coupling portion 434. The radial outer surface of the second leg portion 1200 may be in contact with a radial inner surface of the circumferential portion 450.

The second leg portion may include a leg body 1210 that extends in the vertical direction on the outer surface of the impeller cover 1100, a first coupling portion 1220 that is projected in a radial inner direction on a radial inner surface of the leg body 1210, and a second fastening hole 1230 formed on an upper surface of the body 1210 again.

The first coupling portion 1220 may be projected to a radial inner region from the second leg portion 1200. The first coupling portion 1220 may be coupled to the second coupling portion 3342 of the lower region 334 of the insulator 330.

The second fastening hole 1230 may be overlapped with the first fastening hole 432 of the first leg portion 430 in the vertical direction or axial direction. A fastening member is fastened to a second fastening hole 1230 through the first fastening hole 432 to couple the first leg portion 430 and the second leg portion 1200.

The second leg portion 1200 may include a plurality of second leg portions 1200 that are spaced apart from each other in the circumferential direction. The plurality of respective second leg portions 1200 may directly face each other. That is, no component may be placed in a space between the plurality of second leg portion 1200. As a result, material cost of the motor 10 may be reduced. In addition, since an inside of the motor 10 may be visually checked, it is easy to recognize whether a failure occurs.

In general, the motor 10 is placed in a space isolated from the outside. That is, even if a space is opened between the second legs 1200, the motor 10 will not significantly affect a flow of air passing through the motor 10 in the vertical direction because the motor 10 is placed in the space isolated from the outside.

In an embodiment of the present disclosure, it is described as an example that the number of second leg portions 1200 is three, but is not limited thereto, and the number of second leg portions 1200 may be variously changed.

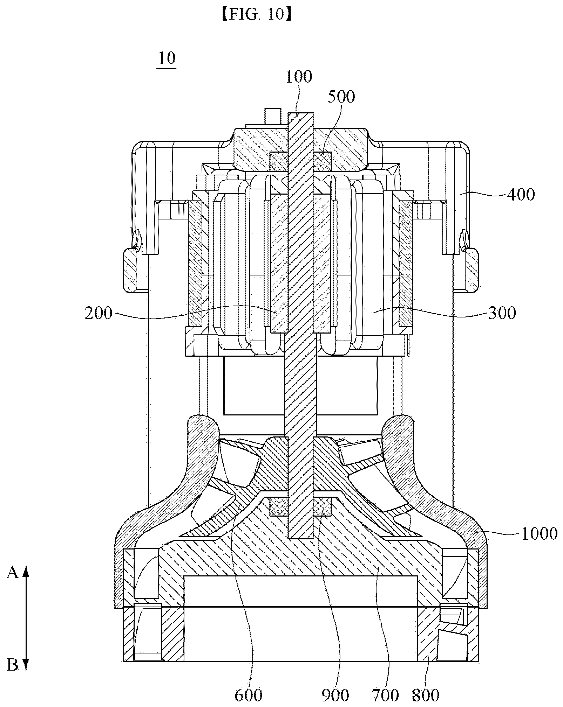

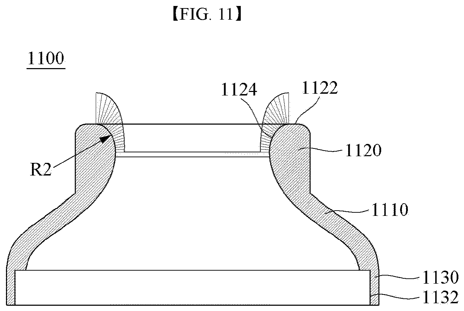

FIG. 10 is a cross-sectional view of a motor according to a second embodiment of the present disclosure. FIG. 11 is a cross-sectional view of an impeller cover of the motor according to the second embodiment of the present disclosure.

Referring to FIGS. 10 and 11, a motor 10 according to a second embodiment of the present disclosure may include a rotational shaft 100, a rotor 200, a stator assembly 300, a first housing 400, a first bearing 500, an impeller 600, diffusers 700 and 800, a second bearing 900, and a second housing 1000, but some components are executed, and other additional components are not also excluded.

Hereinafter, a detailed configuration of the motor 10 according to the second embodiment of the present disclosure, which will not be described, may be understood to be the same as that of the motor 10 of the first embodiment of the present disclosure.

The upper surface 1122 of the impeller cover 1100 may be formed as the curved surface. Specifically, the upper surface 1122 of the upper region 1120 of the impeller cover 1100 may be formed as the curved surface. The region 1124 from the axial upper end to the radial inner end of the impeller cover 1100 may have a curvature radius R2 which increases toward the axial upper portion. The region 1124 from the axial upper end to the radial inner end of the impeller cover 1100 may have a partial shape of an ellipse. Since the curvature radius R2 of the region 1124 from the axial upper end to the radial inner end of the impeller cover 1100 has the curvature radius R2 which gradually decreases toward the axial lower end portion, flow efficiency of air flowing into the impeller cover 1100 may be enhanced.

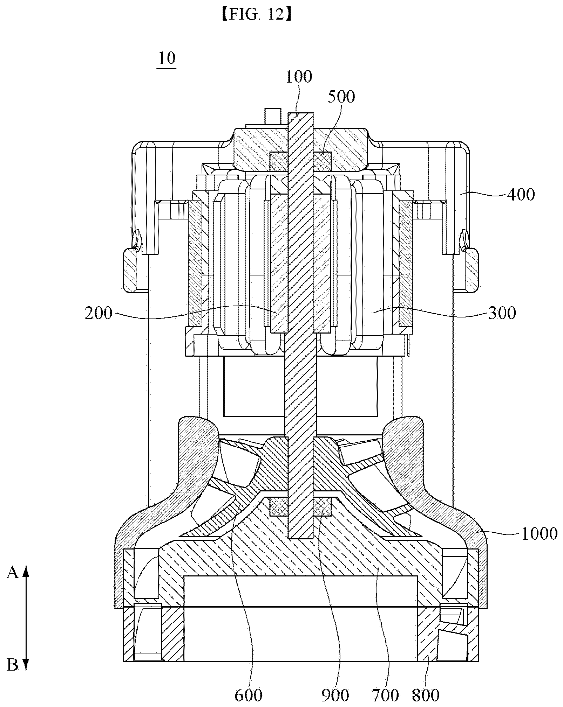

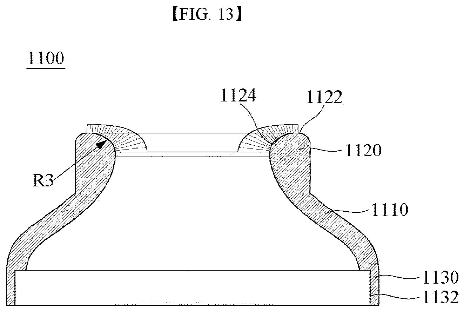

FIG. 12 is a cross-sectional view of a motor according to a third embodiment of the present disclosure. FIG. 13 is a cross-sectional view of an impeller cover of the motor according to the third embodiment of the present disclosure.

Referring to FIGS. 12 and 13, a motor 10 according to a third embodiment of the present disclosure may include a rotational shaft 100, a rotor 200, a stator assembly 300, a first housing 400, a first bearing 500, an impeller 600, diffusers 700 and 800, a second bearing 900, and a second housing 1000, but some components are executed, and other additional components are not also excluded.

Hereinafter, a detailed configuration of the motor 10 according to the third embodiment of the present disclosure, which will not be described, may be understood to be the same as that of the motor 10 of the first embodiment of the present disclosure.

The upper surface 1122 of the impeller cover 1100 may be formed as the curved surface. Specifically, the upper surface 1122 of the upper region 1120 of the impeller cover 1100 may be formed as the curved surface. The region 1124 from the axial upper end to the radial inner end of the impeller cover 1100 may have a curvature radius R3 which decreases toward the axial upper portion. The region 1124 from the axial upper end to the radial inner end of the impeller cover 1100 may have a partial shape of the ellipse.

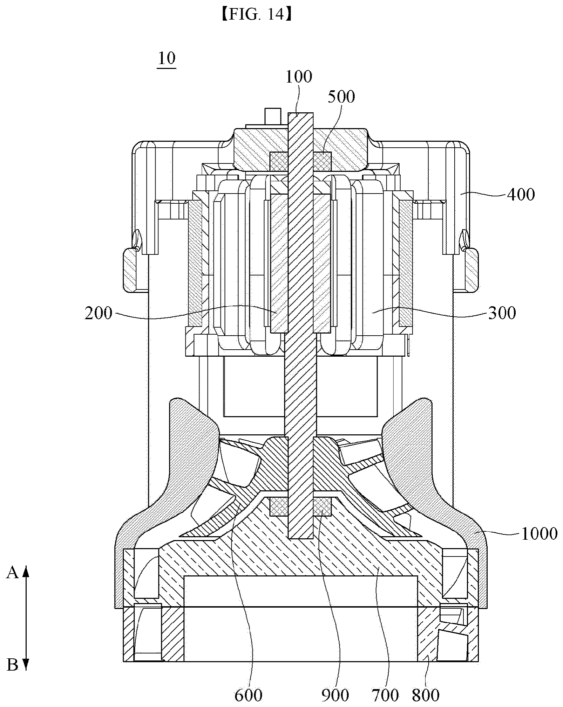

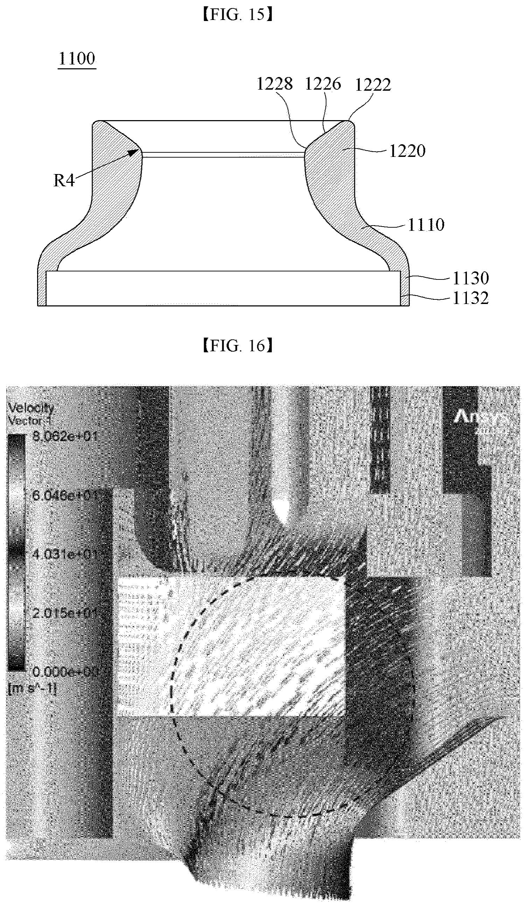

FIG. 14 is a cross-sectional view of a motor according to a fourth embodiment of the present disclosure. FIG. 15 is a cross-sectional view of an impeller cover of the motor according to the fourth embodiment of the present disclosure.

Referring to FIGS. 14 and 15, a motor 10 according to a fourth embodiment of the present disclosure may include a rotational shaft 100, a rotor 200, a stator assembly 300, a first housing 400, a first bearing 500, an impeller 600, diffusers 700 and 800, a second bearing 900, and a second housing 1000, but some components are executed, and other additional components are not also excluded.

Hereinafter, a detailed configuration of the motor 10 according to the fourth embodiment of the present disclosure, which will not be described, may be understood to be the same as that of the motor 10 of the first embodiment of the present disclosure.

The upper surface 1122 of the impeller cover 1100 may be formed as the curved surface. Specifically, the upper surface 1122 of the upper region 1120 of the impeller cover 1100 may be formed as the curved surface.

The impeller cover 1100 may include a tapered surface 1224 placed at an axial lower portion toward the radial inner side from the upper surface 1122, and a curved surface formed in a region 1228 up to the radial inner end from the tapered surface 1224. A cross section of the tapered surface 1224 may be a straight line that forms a constant angle with the axial direction. A curved surface formed from the tapered surface 1224 to the radial inner end may have a constant curvature radius R4. In this case, since the axial length of the impeller cover 1100 increases compared to that of the motor 10 according to the first embodiment, a flow of air flowing into the impeller cover 1100 may be enhanced.

FIG. 16 is a diagram illustrating a flow of air which passes through the motor according to the embodiments of the present disclosure.

Referring to FIG. 16, it can be seen that the air passing through the motor 10 according to the first to fourth embodiments of the present disclosure is rapidly gathers into a space between the impeller cover 1100 and the impeller 600. That is, the air flow may be enhanced through the motor 10 of the embodiments of the present disclosure, thereby enhancing a heat dissipation effect of internal parts of the motor 10.

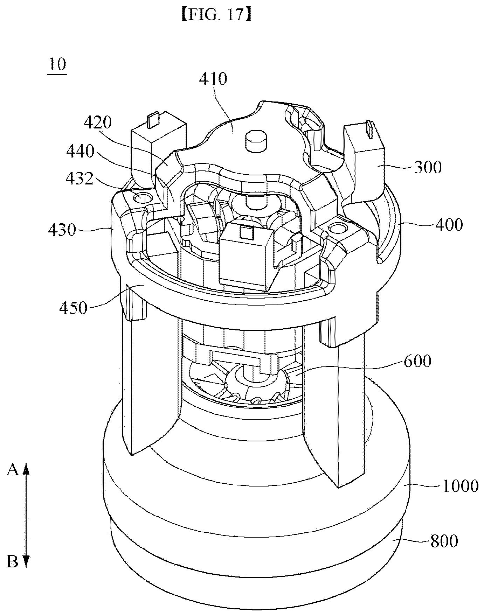

FIG. 17 is a perspective view of some components of a motor according to a fifth embodiment of the present disclosure.

Referring to FIG. 17, a motor 10 according to a fifth embodiment of the present disclosure may include a rotational shaft 100, a rotor 200, a stator assembly 300, a first housing 400, a first bearing 500, an impeller 600, diffusers 700 and 800, a second bearing 900, and a second housing 1000, but some components are executed, and other additional components are not also excluded.

Hereinafter, a detailed configuration of the motor 10 according to the fifth embodiment of the present disclosure, which will not be described, may be understood to be the same as that of the motor 10 of the first embodiment of the present disclosure.

The circumferential portion 450 may connect the plurality of first leg portions 430. The circumferential portion 450 may extend in the circumferential direction. The circumferential portion 450 may be formed at a vertical central region of the first leg portion 430. As a result, rigidity of the first housing 400 may be further enhanced, and vibration generated when the motor 10 operates may be reduced. In this case, unlike the motor 10 according to the first embodiment, a radial inner surface of the circumferential portion 450 is not in contact with the radial outer surface of the second leg portion 1200 structurally.

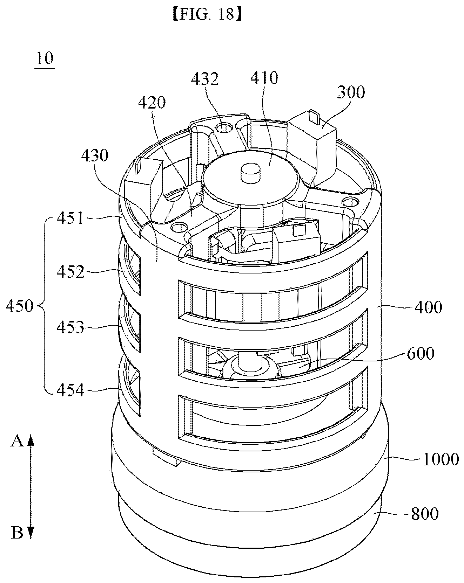

FIG. 18 is a perspective view of some components of a motor according to a sixth embodiment of the present disclosure.

Referring to FIG. 18, a motor 10 according to a sixth embodiment of the present disclosure may include a rotational shaft 100, a rotor 200, a stator assembly 300, a first housing 400, a first bearing 500, an impeller 600, diffusers 700 and 800, a second bearing 900, and a second housing 1000, but some components are executed, and other additional components are not also excluded.

Hereinafter, a detailed configuration of the motor 10 according to the sixth embodiment of the present disclosure, which will not be described, may be understood to be the same as that of the motor 10 of the first embodiment of the present disclosure.

The first leg portion 430 of the first housing 400 according to the sixth embodiment may extend further axially downward than the first leg portion 430 of the first housing 400 according to the first embodiment. The first leg portion 430 may extend downward to cover an entire outer region of the second leg portion 1200. In this case, the circumferential portion 450 may include a plurality of circumferential portions 451, 452, 453, and 454 spaced apart in the axial direction.

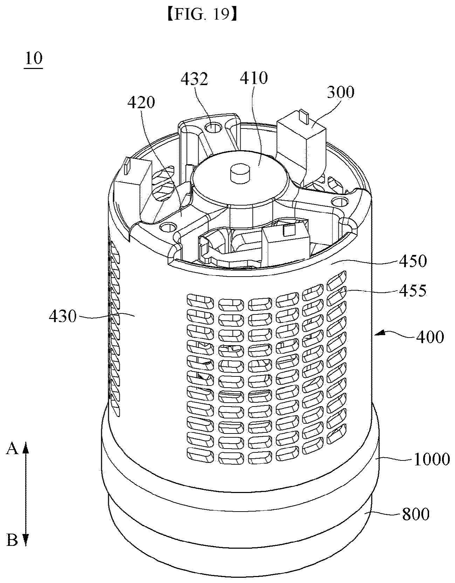

FIG. 19 is a perspective view of some components of a motor according to a seventh embodiment of the present disclosure.

Referring to FIG. 19, a motor 10 according to a seventh embodiment of the present disclosure may include a rotational shaft 100, a rotor 200, a stator assembly 300, a first housing 400, a first bearing 500, an impeller 600, diffusers 700 and 800, a second bearing 900, and a second housing 1000, but some components are executed, and other additional components are not also excluded.

Hereinafter, a detailed configuration of the motor 10 according to the seventh embodiment of the present disclosure, which will not be described, may be understood to be the same as that of the motor 10 of the first embodiment of the present disclosure.

The first leg portion 430 of the first housing 400 according to the seventh embodiment may extend further axially downward than the first leg portion 430 of the first housing 400 according to the first embodiment. The first leg portion 430 may extend downward to cover an entire outer region of the second leg portion 1200. The circumferential portion 450 may connect a plurality of first leg portions 430, and may be formed in a cylindrical shape as a whole. In this case, the circumferential portion 450 may be formed with a plurality of holes 455 penetrating the circumferential portion 450 in the radial direction. A shape of the hole 455 may be an elliptical shape. Unlike this, the hole 455 may also be formed in a polygonal shape. Each of the plurality of holes 455 may include a plurality of first holes that are spaced apart from each other in the vertical direction and a plurality of second holes that are spaced apart from each other in the circumferential direction.

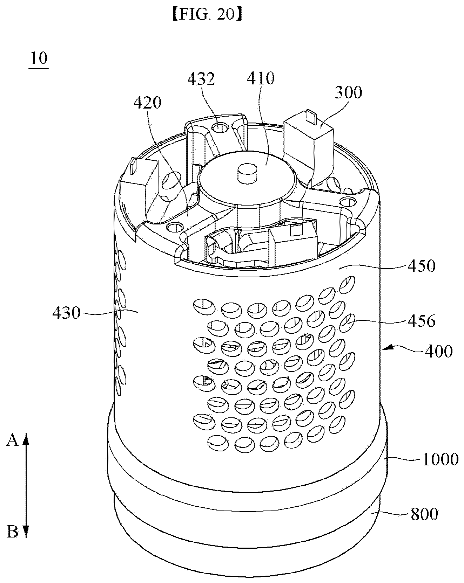

FIG. 20 is a perspective view of some components of a motor according to an eighth embodiment of the present disclosure.

Referring to FIG. 19, a motor 10 according to an eighth embodiment of the present disclosure may include a rotational shaft 100, a rotor 200, a stator assembly 300, a first housing 400, a first bearing 500, an impeller 600, diffusers 700 and 800, a second bearing 900, and a second housing 1000, but some components are executed, and other additional components are not also excluded.

Hereinafter, a detailed configuration of the motor 10 according to the eighth embodiment of the present disclosure, which will not be described, may be understood to be the same as that of the motor 10 of the seventh embodiment of the present disclosure.

The circumferential portion 450 may be formed with a plurality of holes 456 penetrating the circumferential portion 450 in the radial direction. The hole 456 may be formed in a circular shape. Each of the plurality of holes 456 may include a plurality of first holes that are spaced apart from each other in the vertical direction and a plurality of second holes that are spaced apart from each other in the circumferential direction.

While the embodiments of the present disclosure have been described above with reference to the accompanying drawings, it will be understood by those skilled in the art that the present disclosure may be embodied in other specific forms without departing from the spirit or essential characteristics thereof. Therefore, it should be understood that the embodiments described above are illustrative and non-restrictive in every aspect.

## Claims

1. A motor comprising:
a first housing;
a first rotational shaft rotatably coupled to the first housing;
a rotor coupled to the rotational shaft;
a stator assembly coupled to the first housing and placed radially outward of the rotor;
an impeller coupled to an axial lower region of the rotational shaft; and
a second housing coupled to the first housing and enclosing the impeller,
wherein the first housing includes a bearing housing to which the rotational shaft is rotatably coupled, and a plurality of first leg portions that extend from a radial outer side to an axial lower portion of the bearing housing and are spaced apart from each other in a circumferential direction,
wherein the second housing includes an impeller cover covering the impeller, and a plurality of second leg portions that extend from an outer surface of the impeller cover to an axial upper portion and are coupled to the plurality of first leg portions, and
wherein an upper end of the impeller cover is placed at an axial lower portion of the stator assembly and the plurality of second leg portions are placed at a radial outer side of the stator assembly.

2. The motor of claim 1, wherein an upper surface of the impeller cover directly faces a lower surface of the stator assembly.

3. The motor of claim 1, wherein the impeller cover is non-overlapped with the stator assembly in a direction perpendicular to the axial direction.

4. The motor of claim 1, wherein the plurality of second leg portions are spaced apart from each other in the circumferential direction, and
wherein the plurality of second leg portions directly face each other in the circumferential direction.

5. The motor of claim 1, wherein an axial upper region of the impeller cover is formed to have a smaller inner diameter than an axial lower region of the impeller cover.

6. The motor of claim 1, wherein the impeller cover includes an overlapping region overlapped with the impeller in the direction perpendicular to the axial direction, and an upper region that extends toward an axial upper portion in the overlapping region, and
wherein an inner diameter of the upper region increases toward the axial upper portion.

7. The motor of claim 6, wherein an upper surface of the upper region is formed as a curved surface, and
wherein a region from an axial upper end up to a radial inner end of the upper region has a constant curvature radius.

8. The motor of claim 6, wherein the upper surface of the upper region is formed as the curved surface, and
wherein a region from the axial upper end up to the radial inner end of the upper region has a curvature radius which increases toward the axial upper portion.

9. The motor of claim 6, wherein the upper surface of the upper region is formed as the curved surface, and
wherein a region from the axial upper end up to the radial inner end of the upper region has a curvature radius which decreases toward the axial upper portion.

10. The motor of claim 6, wherein the upper region includes a tapered surface placed at an axial lower portion toward a radial inner side from an upper surface.

11. The motor of claim 10, wherein the upper region includes a curved surface formed from the tapered surface up to the radial inner end, and
wherein the curved surface has a constant curvature radius.

12. The motor of claim 6, wherein an outer diameter of the upper region is constant.

13. The motor of claim 6, wherein an inner diameter of the overlapping region decreases toward the axial upper portion.

14. The motor of claim 1, wherein the plurality of second leg portions include first coupling portions which protrude to a radial inner region,
wherein the stator assembly includes
a stator core placed at the radial outer side of the rotor,
a coil wound to the stator core, and
an insulator coupled to the stator core, and
wherein a radial outer surface of an axial lower region of the insulator includes second coupling portions which are formed to be concave at a radial inner side, and coupled to the first coupling portion.

15. The motor of claim 1, wherein the first housing further includes an annular circumferential portion that connects the plurality of first leg portions and extends in a circumferential direction,
wherein the plurality of first leg portions include third coupling portions which are formed to be concave in a radial outer direction from a radial inner surface, and coupled to the plurality of second leg portions, and
wherein a radial outer surface of the plurality of second leg portions is in contact with a radial inner surface of the circumferential portion.

16. The motor of claim 15, wherein the circumferential portion includes a plurality of circumferential portions spaced apart from each other in an axial direction.

17. The motor of claim 1, wherein the first housing includes a plurality of connection portions that connect the bearing housing and the plurality of first leg portions, and
includes fourth coupling portions that extend to an axial lower portion from the plurality of connection portions, and extend in a radial inner direction from the plurality of first leg portions,
wherein the stator assembly includes
a stator core placed at the radial outer side of the rotor,
a coil wound to the stator core, and
an insulator coupled to the stator core, and
wherein a radial outer surface of an axial upper region of the insulator includes fifth coupling portions which are formed to be concave at the radial inner side, and coupled to the fourth coupling portions.

18. The motor of claim 1, wherein the impeller is located downstream of a flow path generated by rotation of the impeller.

19. The motor of claim 1, wherein the first housing further includes a circumferential portion that connects the plurality of first leg portions and extends in the circumferential direction, and
wherein the circumferential portion includes a plurality of holes penetrating the circumferential portion in the radial direction.

20. The motor of claim 1, further comprising:
a diffuser which is coupled to the second housing and to which the rotational shaft is rotatably coupled,
wherein the impeller cover includes an overlapping region overlapped with the impeller in the direction perpendicular to the axial direction, and a lower region that extends toward an axial lower portion in the overlapping region, and
wherein the lower region includes a sixth coupling portion which is formed to be concave from a radial inner surface to a radial outer region, and to which a radial outer surface of the diffuser is coupled.
